(19) Europäisches Patentamt
European Patent Office
Office européen des brevets

(11) Veröffentlichungsnummer: **0 090 213**
**B1**

(12) # EUROPÄISCHE PATENTSCHRIFT

(45) Veröffentlichungstag der Patentschrift: **02.05.85**

(51) Int. Cl.⁴: **C 07 F 9/38**

(21) Anmeldenummer: **83102303.1**

(22) Anmeldetag: **09.03.83**

(54) **Verfahren zur Herstellung von Derivaten der Vinylphosphon- oder Vinylpyrophosphonsäure.**

(30) Priorität: **22.03.82 DE 3210419**

(43) Veröffentlichungstag der Anmeldung:
**05.10.83 Patentblatt 83/40**

(45) Bekanntmachung des Hinweises auf die Patenterteilung:
**02.05.85 Patentblatt 85/18**

(84) Benannte Vertragsstaaten:
**BE CH DE FR GB IT LI NL**

(56) Entgegenhaltungen:
**EP - A - 0 068 350**
**DE - B - 2 060 259**

**BULLETIN OF THE ACADEMY SCIENCE OF THE USSR, Band 26, Nr. 9, Teil 1, September 1977DOVIK and al. "The Arbuzov reaction and its development in the works of the Kazan school of chemists", Seiten 1805-1821**

(73) Patentinhaber: **HOECHST AKTIENGESELLSCHAFT, Postfach 80 03 20, D-6230 Frankfurt am Main 80 (DE)**

(72) Erfinder: **Pieper, Werner, Dr., Am Wachberg 27a, D-5042 Erftstadt (DE)**
Erfinder: **Krause, Werner, Dr., Alleestrasse 42, D-5030 Hürth-Knapsack (DE)**

**EP 0 090 213 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand vorliegender Erfindung ist ein Verfahren zur Herstellung von Derivaten der Vinylphosphon- oder Vinylpyrophosphonsäure.

Vinylphosphon-, Vinylpyrophosphonsäure und die Derivate dieser Säuren sind von technischem Interesse, da sie zu hochmolekularen Verbindungen polymerisiert oder mit anderen polymerisationsfähigen Vinylverbindungen zu einem Mischpolymerisat verarbeitet werden können.

Man erhielt sie bislang durch Umsetzung von Ketonen mit $PCl_3$. Diese Darstellungsweise besass jedoch erhebliche Nachteile, da sie mehrstufig über verschiedene Zwischenprodukte verläuft, wobei das als Chlorwasserstoff bzw. Acetylchlorid abgespaltene Chlor grosse Korrosionsprobleme aufwirft.

Es wurde auch schon vorgeschlagen, zur Herstellung von Derivaten von Vinylphosphonsäure oder von Vinylpyrophosphonsäure ein Keton mit Tetraphosphorhexoxid ($P_4O_6$) in Gegenwart von katalytischen Mengen einer protonenabgebenden Substanz bei erhöhten Temperaturen umzusetzen und im Falle der Herstellung von Vinylphosphonsäurederivaten die erhaltenen Vinylpyrophosphonsäurederivate mit einer äquivalenten Menge Wasser zu hydrolysieren.

Als Ketone wurden dabei Verbindungen der allgemeinen Formel

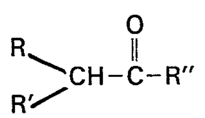

eingesetzt, in der R und R′ gleich oder verschieden sein können und für Wasserstoff oder einen halogensubstituierten oder nicht substituierten Alkyl-, Aryl-, Alkaryl- oder Aralkylrest mit 1 bis 18 C-Atomen stehen, während R″ einen Alkyl-, Aryl-, Alkaryl- oder Aralkylrest mit 1 bis 18 C-Atomen darstellt (EP Nr. 0068350).

Überraschenderweise wurde nun gefunden, dass im Rahmen der genannten Umsetzung auch solche Ketone zu Derivaten der Vinylphosphon- bzw. -pyrophosphonsäure führen, in deren allgemeiner Formel I entweder

a) R ausschliesslich ein Halogen und R′ entweder ebenfalls ein Halogen ist oder für Wasserstoff, einen halogensubstituierten oder nicht substituierten Alkyl-, Aryl-, Alkaryl- oder Aralkylrest mit 1 bis 18 C-Atomen steht, während R″ einen Alkyl-, Aryl-, Alkaryl-, Aralkyl- oder Alkenylrest mit 1 bis 18 C-Atomen darstellt, oder

b) R″ ausschliesslich einen Alkylenrest mit 2 bis 18 C-Atomen darstellt und R und R′ gleich oder verschieden sein können und für Wasserstoff oder ein Halogen oder einen halogensubstituierten oder nicht substituierten Alkyl-, Aryl-, Alkaryl- oder Aralkylrest mit 1 bis 18 C-Atomen stehen.

Insbesondere eignen sich solche Ketone, in denen das Halogen Chlor oder Brom ist.

Die Umsetzung der erfindungsgemäss eingesetzten Ketone war für den Fachmann nicht vorhersehbar, weil einerseits aus der DD-PS 112763 bekannt ist, dass α-Halogencarbonylverbindungen mit $P_4O_6$ normalerweise zu Pyrophosphorsäuredivinylesterdichloriden reagiren und weil andererseits bekannt ist, dass α,β-ungesättigte Ketone mit Phosphortrichlorid oder Phosphorigsäuredialkylestern zu γ-Oxoalkanphosphonsäurederivaten reagieren (Houben-Weyl, „Methoden der organischen Chemie", Bd. 12/1, 1963, S. 361 und 470) und weil schliesslich zu erwarten war, dass alkenylgruppentragende Ketone in Gegenwart der protonenabgebenden Substanzen polymerisieren würden.

Vorteilhafterweise setzt man das Keton mit dem $P_4O_6$ in einem Molverhältnis von mindestens 4:1 um.

Es empfiehlt sich, die protonenabspaltende Substanz in Mengen von mindestens 0,0001, vorzugsweise von 0,01 bis 1 Gew.-%, bezogen auf $P_4O_6$, einzusetzen und die Umsetzung bei Temperaturen von 40 bis 150° C durchzuführen.

Als protonenabspaltende Substanzen sind beispielsweise geeignet: Wasser, Alkohole, Amine, Salzsäure, Schwefelsäure, Phosphorsäure, phosphorige Säure, Phosphonsäuren oder Carbonsäuren.

Besonders bevorzugt für diesen Zweck ist der Zusatz des jeweiligen herzustellenden Endproduktes, da hierdurch keine Fremdsubstanzen in die Reaktion eingebracht werden.

Eine bevorzugte Durchführung des erfindungsgemässen Verfahrens erfolgt in der Weise, dass man zu vorgelegtem Keton, welches gegebenenfalls mit einem inerten organischen Lösemittel verdünnt ist, $P_4O_6$ dosiert. Das $P_4O_6$ kann ebenfalls mit einem inerten organischen Lösemittel verdünnt werden. Damit die Reaktion gestartet werden kann, muss das vorgelegte Keton eine katalytische Menge einer Substanz enthalten, die sich dadurch auszeichnet, dass sie leicht Protonen abspaltet und spontan mit $P_4O_6$ unter Öffnung einer P-O-P-Bindung reagiert.

Die Zugabe des $P_4O_6$ erfolgt vorzugsweise kontinuierlich bei erhöhter Temperatur, insbesondere im Bereich von 40 bis 150° C. In diesem Temperaturbereich reagiert das $P_4O_6$ in einer exothermen Reaktion vollständig ab. Während der Umsetzung ist eine zusätzliche Heizung meist nicht erforderlich, da die Reaktionsenthalpie ausreicht, die gewählte Reaktionstemperatur zu halten, so dass die Temperatur über die Zugabegeschwindigkeit des $P_4O_6$ gesteuert werden kann.

Bei den besonders reaktionsfähigen Ketonen führt die Umsetzung direkt zu Derivaten der Vinylpyrophosphonsäure, die entweder als solche isoliert oder nach Zugabe der stöchiometrisch erforderlichen Menge Wasser zu entsprechenden Vinylphosphonsäurederivaten umgesetzt werden können.

In den übrigen Fällen schliesst sich jedoch an die Umsetzung Keton/$P_4O_6$ eine thermische Nachbehandlung des zunächst polymer anfallenden Rohprodukts an. Dazu wird dieses Rohprodukt für 10 bis 60 min auf Temperaturen zwischen der Umsetzungstemperatur und 250° C erhitzt. Die jeweilige Mindesttemperatur ist dabei von der Reaktionsfähigkeit des verwendeten Ketons abhängig. Auf diese Weise erhält man die rohen Vinylpyrophosphonsäurederivate, die wiederum durch Zugabe der berechneten Menge Wasser in die entsprechenden Vinylphosphonsäurederivate übergeführt werden können.

Es besteht auch die Möglichkeit, das Rohprodukt im Autoklaven mit einem Überschuss Wasser bei erhöhten Temperaturen und erhöhtem Druck direkt zu den Vinylphosphonsäurederivaten umzusetzen.

Wie die folgenden Beispiele verdeutlichen, handelt es sich bei dem erfindungsgemässen Verfahren um einen neuen Zugang zu Verbindungen der Phosphonsäure, die damit in einfacher Weise und in hoher Ausbeute durch Umsetzung von Tetraphosphorhexoxid und den beanspruchten Ketonen herzustellen sind.

*Beispiel 1*

In einem 250-ml-Mehrhalskolben mit Rührer, Thermometer, Rückflusskühler und Tropftrichter werden unter Inertgasatmosphäre zu 62 g (0,4 mol) auf 150°C erhitztes α-Chloracetophenon, $Cl-CH_2-CO-C_6H_5$, und 0,1 g (0,00045 mol) 2-Chlor-1-phenylvinyl-1-phosphonsäure 22 g (0,1 mol) $P_4O_6$ unter Rühren so zugetropft, dass 155°C nicht überstiegen werden. Nach ca. 5minütiger Nachreaktion werden 100 ml Xylol hinzugegeben und bei etwa 110°C 5 ml (0,3 mol) Wasser zugesetzt. Anschliessend wird überschüssiges Wasser azeotrop abdestilliert. Beim Abkühlen der Lösung kristallisiert 2-Chlor-1-phenylvinyl-1-phosphonsäure aus, von der nach dem Abfiltrieren und Waschen des Filterrückstands mit Xylol und Hexan 66 g (0,3 mol; 75%) isoliert werden. Schmelzpunkt: 134-138°C.

*Beispiel 2*

In einer Apparatur analog Beispiel 1 werden zu 157 g (1,6 mol) Mesityloxid, $(H_3C)_2C=CH-CO-CH_3$, in 160 ml Toluol nach Zusatz von 1 ml Wasser 88 g (0,4 mol) $P_4O_6$ zugetropft, wobei ohne zusätzliche Wärmezufuhr die Siedetemperatur des Toluols erreicht wird. Die toluolische Lösung enthält laut $^{31}P$-NMR-Spektrum 50% 4-Methylpenta-2,4-dien-2-pyrophosphonsäure neben u.a. 30% 4-Methylpenta-2,4-dien-2-phosphonsäure, bezogen auf eingesetzten Phosphor. Nach Hydrolyse des Rohproduktes mit 100 ml Wasser liegen in der wässerigen Phase ca. 80% des eingesetzten Phosphors als 4-Methylpenta-2,4-dien-2-phosphonsäure vor.

## Patentansprüche

1. Verfahren zur Herstellung von Derivaten der Vinylphosphon- oder Vinylpyrophosphonsäure durch Umsetzung eines Ketons mit Tetraphosphorhexoxid ($P_4O_6$) in Gegenwart von katalytischen Mengen einer protonenabgebenden Substanz bei erhöhten Temperaturen und gegebenenfalls Hydrolyse der erhaltenen Vinylpyrophosphonsäurederivate mit einer äquivalenten Menge Wasser, dadurch gekennzeichnet, dass man als Keton eine Verbindung der allgemeinen Formel

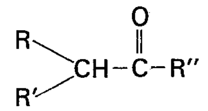

einsetzt, in der entweder

a) R ein Halogen und R' entweder ebenfalls ein Halogen ist oder für Wasserstoff, einen halogensubstituierten oder nicht substituierten Alkyl-, Aryl-, Alkaryl- oder Aralkylrest mit 1 bis 18 C-Atomen steht, während R'' einen Alkyl-, Aryl-, Alkaryl-, Aralkyl- oder Alkenylrest mit 1 bis 18 C-Atomen darstellt, oder

b) R'' einen Alkylenrest mit 2 bis 18 C-Atomen darstellt und R und R' gleich oder verschieden sein können und für Wasserstoff oder ein Halogen oder einen halogensubstituierten oder nicht substituierten Alkyl-, Aryl-, Alkaryl- oder Aralkylrest mit 1 bis 18 C-Atomen stehen.

2. Verfahren nach Anspruch 1, dadurch gekennzeichnet, dass das Halogen Chlor oder Brom ist.

## Claims

1. Process for making derivatives of vinylphosphonic acid or vinylpyrophosphonic acid by reacting a ketone with tetraphosphorus hexoxide ($P_4O_6$) in the presence of catalytically active quantities of a proton-yielding substance at elevated temperature and optionally hydrolizing the vinylpyrophosphonic acid derivatives obtained with an equivalent quantity of water, which comprises using as the ketone a compound of the general formula

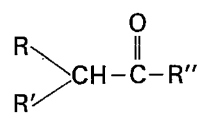

in which either

(*a*) R stands for a halogen and R' either equally stands for a halogen or hydrogen, a halogen-substituted or unsubstituted alkyl, aryl, alkaryl or aralkyl group having from 1 to 18 carbon atoms, and R'' stands for an alkyl, aryl, alkaryl, aralkyl or alkenyl group having from 1 to 18 carbon atoms, or

(*b*) R'' stands for an alkenyl group having from 2 to 18 carbon atoms and R and R' being identical or different each stand for hydrogen or a halogen or a halogen-substituted or unsubstituted alkyl, aryl, alkaryl or aralkyl group having from 1 to 18 carbon atoms.

2. Process as claimed in Claim 1, wherein the halogen is chlorine or bromine.

## Revendications

1. Procédé de préparation de dérivés de l'acide vinylphosphonique ou vinylpyrophosphonique par réaction d'une cétone avec l'hexoxyde tétra-

phosphorique ($P_4O_6$) en présence de quantités catalytiques cédant des protons à des températures élevées et, éventuellement, hydrolyse des dérivés de l'acide vinylpyrophosphonique obtenus par une quantité d'eau équivalente, caractérisé en ce que l'on utilise comme cétone un composé répondant à la formule générale

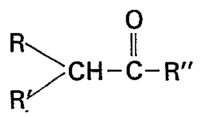

dans laquelle soit

a) R représente un halogène et R' représente également soit un halogène, soit l'hydrogène, un reste alkyle, aryle, alkylaryle ou arylalkyle en $C_1$-$C_{18}$ substitué par un halogène ou non substitué, tandis que R'' représente un reste alkyle, aryle, alkylaryle ou arylalkyle en $C_1$-$C_{18}$, ou

b) R'' représente un reste alkylène en $C_1$-$C_{18}$ et R et R', pouvant être identiques ou différents, représentent l'hydrogène ou un halogène ou un reste alkyle, aryle, alkylaryle ou arylalkyle en $C_1$-$C_{18}$ halogénosubstitué ou non substitué.

2. Procédé selon la revendication 1, caractérisé en ce que l'halogène est le chlore ou le brome.